# EUROPÄISCHE PATENTSCHRIFT

(11) **EP 1 688 723 B1**
(45) Veröffentlichungstag und Bekanntmachung des Hinweises auf die Patenterteilung: **03.10.2007**
(21) Anmeldenummer: 05000728.5
(22) Anmeldetag: 14.01.2005
(51) Int. Cl.: G01K 11/20

(54) **Beschichtetes Bauteil und Verfahren zur Herstellung**
Coated component and manufacturing method
Elément revêtu et procédé de fabrication

(43) Veröffentlichungstag der Anmeldung: 09.08.2006
(73) Patentinhaber: SIEMENS AKTIENGESELLSCHAFT, 80333 München (DE)
(72) Erfinder: Lampenscherf, Stefan, Dr., 85586 Poing (DE)

(56) Entgegenhaltungen:
- WO-A-00/06796
- WO-A-20/05019784
- US-A- 5 849 416
- DATABASE INSPEC [Online] THE INSTITUTION OF ELECTRICAL ENGINEERS, STEVENAGE, GB; März 2004 (2004-03), ELDRIDGE J I ET AL: "Depth-penetrating temperature measurements of thermal barrier coatings incorporating thermographic phosphors" XP002333322 Database accession no. 8099253 & Journal of Thermal Spray Technology ASM Int USA, Bd. 13, Nr. 1, März 2004 (2004-03), Seiten 44-50, ISSN: 1059-9630

## Beschreibung

Die vorliegende Erfindung betrifft ein beschichtetes Bauteil, welches einen aus einem Grundmaterial hergestellten Bauteilkörper und eine auf dem Grundmaterial aufgebrachte wärmedämmende Beschichtung umfasst und Verfahren zur Herstellung dieses Bauteils.

Auf dem Weg zu einer ressourcen- und umweltschonenden Energieerzeugung spielt die Effizienzsteigerung eine zentrale Rolle. So ist bis zum Jahr 2025 eine Steigerung des Gesamtwirkungsgrades von Kombikräften (Kombination aus Gasturbinenkraftwerk und Dampfturbinenkraftwerk) auf über 60% anvisiert. Um dieses Ziel verwirklichen zu können, muss die Effizienz der Gasturbinen gesteigert werden.

Ein wichtiger Parameter für die Effizienzsteigerung von Gasturbinen ist die Turbineneintrittstemperatur. Der derzeitige Wirkungsgrad einer Gasturbine von ca. 38% kann mit einer Turbineneintrittstemperatur von 1230°C (ISO) erreicht werden. Eine Effizienzsteigerung der Gasturbine würde eine Erhöhung der Turbineneintrittstemperatur erfordern. Um beispielsweise den Wirkungsgrad einer Gasturbine auf 45% zu steigern, würde eine Erhöhung der Turbineneintrittstemperatur auf ca. 1350°C notwendig sein.

Neben der Verwendung verbesserter Grundwerkstoffe und effektiver Kühlungsmethoden stellt der Einsatz von keramischen Wärmedämmschichten eine Schlüsseltechnologie zum Erreichen dieses Zieles dar. Aufgrund der thermisch isolierenden Wirkung der keramischen Wärmedämmschicht kann die Oberfläche des beschichteten Bauteils einer Temperatur ausgesetzt werden, die um einige 100°C höher liegen kann als ohne die Wärmedämmschicht, ohne dass die Kühlungsbedingungen des Bauteils geändert werden müssten. Voraussetzung für den effizienten Einsatz keramischer Wärmedämmschichten (im folgenden TBC, Thermal Barrier Coating, genannt) in Gasturbinen ist neben einer kostengünstigen Prozesstechnologie vor allem die strukturelle Stabilität und damit die Zuverlässigkeit der TBC unter den in Gasturbinen herrschenden Einsatzbedingungen. So muss für Gasturbinen im Bereich von Kraftwerksanwendungen eine störungsfreie Funktion über 20000 so genannte äquivalente Betriebsstunden und mehr sichergestellt werden. Ein vorzeitiges Versagen der TBC würde in der Folge zur Überhitzung des Grundwerkstoffes der beschichteten Turbinenbauteile und möglicherweise zu einem katastrophalen Turbinenschaden führen. Die durch einen Turbinenschaden verursachten Betriebsausfall- und Instandsetzungskosten können erheblich sein und würden letztlich den technologischen Nutzen der TBC aufheben.

In zukünftigen Generationen hocheffizienter Gasturbinen wird man sich immer weiter den Belastungsgrenzen der TBC annähern. Um das Ausfallrisiko durch diese Annäherung nicht unkontrolliert zu steigern, müssen die für das Versagen der TBC kritischen Belastungsparameter beim Betrieb gemessen und kontrolliert werden. Wichtige Belastungsparameter sind in diesem Zusammenhang die Oberflächentemperatur der TBC an kritischen Bauteilpositionen, so genannten Hot Spots, sowie die Zeitabhängigkeit der Oberflächentemperatur. Letztere ist insbesondere für die Übergänge zwischen verschiedenen Betriebszuständen der Gasturbine, etwa beim Anfahren der Gasturbine, von Bedeutung.

Es besteht daher Bedarf an einem geeigneten Sensorelement, das sich zur Temperatur- und Wärmestrommessung in der TBC unter Betriebsbedingungen einer Gasturbine eignet.

Bereits heute werden Pyrometer und Wärmebildkameras zum Messen der Oberflächentemperatur von Leitschaufeln in Gasturbinen eingesetzt. Dabei wird die von der TBC-Oberfläche in einem bestimmten Wellenlängenbereich, beispielsweise im Infrarot oder im nahen Infrarot, emittierte Strahlung detektiert und unter Berücksichtigung der Emissivität sowie der Detektorempfindlichkeit in eine äquivalente Oberflächentemperatur der TBC umgerechnet. Schwierigkeiten bereitet dabei die zumeist unzureichende Kenntnis der wellenlängenabhängigen Emissivität der TBC-Oberfläche, die unter anderem durch Ablagerungen auf der TBC-Oberfläche (beispielsweise Rost) empfindlich beeinflusst werden kann.

Eine weitere Möglichkeit zur Messung von Oberflächentemperaturen besteht in der Verwendung thermographischer Leuchtstoffe. Eine Wärmedämmschicht mit eingebettetem Thermolumineszenz-Indikatorwerkstoff und Verfahren zum Ermitteln der Temperatur der Wärmedämmschicht sind beispielsweise in EP 1 105 550 B1 beschrieben. Zum Ermitteln der Temperatur der Wärmedämmschicht wird der Indikatorwerkstoff mittels eines gepulsten Lasers zum Fluoreszieren angeregt. Nach dem Abschalten des Anregungsimpulses fällt die Intensität des Fluoreszenzspektrums mit einer charakteristischen Zeitkonstante t exponentiell ab. So zeigt beispielsweise mit Terbium (Tb) dotiertes Yttrium Aluminium Garnet (YAG:Tb) zwischen 700 und 1000 °C eine monotone Abnahme der charakteristischen Zeitkonstante t. Anhand einer Messung der Zeitkonstante kann die Temperatur des Indikatorwerkstoffes und damit der Wärmedämmschicht, in die er eingebettet ist, festgestellt werden, sofern eine geeignete Kalibrierung vorgenommen wurde. Unter Umständen können verschiedene Linien des Emissionsspektrums unterschiedliche Abkühlungkonstanten besitzen, die auch unterschiedliche Temperaturabhängigkeiten aufweisen können.

Statt des zeitlichen Abkühlungverhaltens der Emissionsintensität des Indikatorwerkstoffes kann auch das Intensitätsverhältnis zweier Emissionswellenlängen zum Ermitteln der Temperatur des Indikatorwerkstoffes, und damit der Temperatur der Wärmedämmschicht, herangezogen werden. Das Intensitätsverhältnis hängt näherungsweise linear von der Temperatur des Indikatorwerkstoffes - d.h. von der Temperatur der Wärmedämmschicht, in die der Indikatorwerkstoff eingebettet ist - ab. Das Messen der Temperatur über das Intensitätsverhältnis ist ebenfalls in EP 1 105 550 B1 beschrieben.

Der Vorteil beim Verwenden von Messmethoden, die auf thermographischen Leuchtstoffen beruhen, liegt in der Unabhängigkeit von der meist nur unzureichend bekannten Emissivität der TBC sowie der Unabhängigkeit vom Einfluss von Oberflächenverunreinigungen, welche oft die Eigenschaft der TBC als Wärmestrahler beeinflussen. Die spezifischen Eigenschaften des Emissionsspektrums des Leuchtstoffes werden dagegen durch die Emissivität und die Oberflächenverunreinigungen nur wenig beeinflusst.

Grenzen der Temperaturmessung mittels Emissionsspektren thermographischer Leuchtstoffe setzen die Beschränkung der Temperatursensibilität der Leuchtstoffe auf jeweils einen bestimmten Temperaturbereich sowie die limitierte Langzeitstabilität eines thermographischen Leuchtstoffes unter den thermischen und atmosphärischen Bedingungen einer Gasturbine.

Im Lichte des beschriebenen Standes der Technik ist es Aufgabe der vorliegenden Erfindung, ein beschichtetes Bauteil und ein entsprechendes Verfahren zur Verfügung zu stellen, welches sich in besonderer Weise zu einer Temperaturmessung unter den thermischen und atmosphärischen Bedingungen einer Gasturbine eignet.

Diese Aufgabe wird durch ein beschichtetes Bauteil nach Anspruch 1 und ein Verfahren nach Anspruch 18, 20 oder 22 gelöst. Die abhängigen Ansprüche enthalten vorteilhafte Ausgestaltungen der Erfindung, die beliebig miteinander verknüpft werden können.

Ein erfindungsgemäßes beschichtetes Bauteil, welches als Bauteil einer heißgasführenden Struktur, etwa einer Gasturbine, ausgebildet ist, umfasst einen aus einem Grundmaterial hergestellten Bauteilkörper und eine auf dem Grundmaterial aufgebrachte wärmedämmende Beschichtung (Thermal Barrier Coating, TBC). Hierbei kann die wärmedämmende Beschichtung entweder direkt auf das Grundmaterial aufgebracht sein oder unter Zwischenschaltung einer so genannten Haftvermittlerbeschichtung (Bond Coat). Die wärmedämmende Beschichtung kann zudem entweder einlagig oder mehrlagig ausgebildet sein. Außerdem enthält die wärmedämmende Beschichtung einen thermographischen Leuchtstoff. Erfindungsgemäß weist die wärmedämmende Beschichtung wenigstens eine Vertiefung auf. Der thermographische Leuchtstoff ist im Bodenbereich der Vertiefung angeordnet. Jede Vertiefung weist eine Tiefe und eine Breite auf, die derart gewählt ist, dass ihr Boden vor einem direkten Angriff des Heißgases geschützt ist. Die hierzu nötigen Abmessungen der Vertiefung hängen insbesondere von der Temperatur des Heißgases, von der Position der Vertiefung am Bauteil und von den Strömungsverhältnissen in der heißgasführenden Struktur ab. Geeignete Tiefen und Breiten der Vertiefungen sind entsprechend empirisch zu bestimmen.

Das Anordnen des thermographischen Leuchtstoffes in einer Vertiefung der wärmedämmenden Beschichtung bietet die Möglichkeit, den Leuchtstoff vor dem direkten Angriff eines Heißgases zu schützen, und somit vor dessen korrosiver und abrasiver Wirkung zu schützen, wenn das beschichtete Bauteil in einem heißgasführenden Bereich einer Gasturbine eingesetzt wird.

Das Anordnen des thermographischen Leuchtstoffes im Bodenbereich der Vertiefung bietet darüber hinaus den Vorteil, dass die Oberflächentemperaturen an der Oberfläche der wärmedämmenden Beschichtung auch oberhalb des für den thermographischen Leuchtstoff optimalen Bereichs liegen können. Ein weiterer Vorteil liegt darin, dass die Alterung des Leuchtstoffes nicht unmittelbar von der Oberflächentemperatur der wärmedämmenden Beschichtung abhängt. Auch treten keine Probleme aufgrund mangelnder Transparenz der wärmedämmenden Beschichtung für die Emissionswellenlängen des Leuchtstoffes auf, da über dem am Bodenbereich angeordneten Leuchtstoff keine wärmedämmende Beschichtung vorhanden ist.

Wenn das Bauteil wenigstens zwei Vertiefungen unterschiedlicher Tiefe aufweist, in deren Bodenbereich thermographische Leuchtstoffe mit unterschiedlichen Leuchteigenschaften vorhanden sind, ist eine Messung des Wärmeflusses von der Beschichtungsoberfläche in Richtung auf das Grundmaterial hin möglich.

Der thermographische Leuchtstoff kann insbesondere so gewählt sein, dass er selber ebenfalls wärmedämmende Eigenschaften besitzt.

In einer Ausgestaltung des erfindungsgemäßen beschichteten Bauteils ist der thermographische Leuchtstoff im Inneren der wärmedämmenden Beschichtung angeordnet. Die wenigstens eine Vertiefung ist dann derart ausgebildet, dass der thermographische Leuchtstoff im Bereich der Vertiefung durch diese freigelegt ist. Dies kann insbesondere dadurch realisiert sein, dass die Beschichtung wenigstens zwei übereinander aufgebrachte Schichten aufweist. In diesem Fall besitzt wenigstens die äußerste Schicht wärmedämmende Eigenschaften. Thermographischer Leuchtstoff ist in einer wenigstens von der äußersten Schicht bedeckten Schicht angeordnet und die wenigstens eine Vertiefung erstreckt sich durch die über einer Leuchtstoffschicht angeordneten Schichten. Diese Ausgestaltung bietet die Möglichkeit, eine oder mehrere thermographischen Leuchtstoff enthaltende Schichten großflächig auf das Bauteil aufzubringen. Maskierungen, wie sie zum lokalen Aufbringen thermographischer Leuchtstoffe verwendet werden, sind nicht erforderlich. Zudem bietet diese Ausgestaltung gleichzeitig die Möglichkeit, im Betrieb des Bauteils anhand des Freilegens von thermographischem Leuchtstoff an Stellen, an denen keine Vertiefung vorhanden sein sollte, die Abnutzung der über der Leuchtstoff enthaltenden Schicht liegenden Schichten festzustellen. Das Herstellen mehrlagiger Beschichtungen lässt sich zudem zwanglos in bestehende Prozesse eingliedern.

Statt des Herstellens mehrlagiger Beschichtungen ist es alternativ jedoch auch möglich, eine Beschichtung mit einem thermographischen Leuchtstoff zu dotieren. Unter Dotierung ist hierbei das Einbringen vom Fremdstoffen in ein Beschichtungsmaterial zu verstehen. Als Fremdstoffe sollen hierbei solche Stoffe angesehen werden, welche in der eigentlichen stofflichen Zusammensetzung der Beschichtung selbst nicht enthalten sind.

In einem erfindungsgemäßen beschichteten Bauteil kann der thermographische Leuchtstoff in Form mindestens einer wenigstens im Bereich einer Vertiefung in die wärmedämmende Beschichtung eingebrachten Dotierung vorliegen. Insbesondere kann jede Dotierung eine sich in einem bestimmten Abstand von der Beschichtungsoberfläche durch die gesamte wärmedämmende Beschichtung erstreckende dotierte Zone bilden. Die Tiefe der wenigstens einen Vertiefung ist dann derart gewählt, dass eine dotierte Zone im Bereich der Vertiefung freigelegt ist. In dieser Ausgestaltung kann eine großflächige Dotierung des Bauteils erfolgen. Masken zum Dotieren sind daher nicht nötig. Außerdem besteht die Möglichkeit, eine in einem bestimmten Abstand von der Beschichtungsoberfläche angeordnete dotierte Zone als Abnutzungsanzeige zu verwenden.

Die Dotierung kann jedoch auch, etwa unter Verwendung von Masken, lediglich lokal in die wärmedämmende Beschichtung eingebracht werden. So kann beispielsweise ein beschichtetes Bauteil zur Verfügung gestellt werden, in welchem eine Dotierung lediglich im Bodenbereich der wenigsten einen Vertiefung vorliegt. Eine lokale Dotierung ist insbesondere dann interessant, wenn das Einbringen des Dotierstoffes die thermischen Eigenschaften der wärmedämmenden Beschichtung beeinflusst. Eine derartige Beeinflussung kann in der Regel minimiert werden, indem lediglich ein geringer Prozentsatz an Dotierstoff in die Beschichtung eingebracht wird. Ein geringer Prozentsatz an Dotierstoff führt jedoch auch dazu, dass die Emission des Leuchtstoffes lediglich eine relativ geringe Intensität aufweist. Es ist daher eine gewisse Mindestmenge an Dotierstoff nötig, um eine zuverlässige Messung der Temperatur der wärmedämmenden Beschichtung zu ermöglichen. Wenn nun diese minimale Konzentration oder die gewünschte Konzentration die thermischen Eigenschaften der wärmedämmenden Beschichtung negativ beeinflusst, wäre eine großflächige Dotierung nicht angezeigt. Bei einer lediglich lokalen Anordnung des Dotierstoffes kann gegebenenfalls jedoch eine lokale Verschlechterung der thermischen Eigenschaften hingenommen werden, insbesondere wenn der dotierte Bereich der Beschichtung durch seine Lage in einer Vertiefung vor dem direkten Angriff des Heißgases geschützt ist.

Eine lediglich lokale Anordnung des thermographischen Leuchtstoffes kann jedoch statt durch Dotierung auch dadurch erreicht werden, dass dieser als auf den Boden der Vertiefung aufgebrachte Leuchtstoffbeschichtung vorliegt.

Im erfindungsgemäßen beschichteten Bauteil kann die Vertiefung insbesondere grabenförmig ausgestaltet sein. Grabenförmige Strukturen haben einen vorteilhaften Effekt auf die Stabilität von wärmedämmenden Beschichtungen, was sich besonders bei Übergängen zwischen verschiedenen Betriebszuständen und den damit verbundenen thermischen Belastungen als vorteilhaft erweist. Entsprechend werden Grabenstrukturen insbesondere gezielt in thermisch hoch belasteten Bereichen der wärmedämmenden Beschichtung angeordnet. Gerade dort ist jedoch auch die Information über Temperatur und Wärmestrom innerhalb der wärmedämmenden Beschichtung besonders wichtig, um eine Überlastung rechtzeitig zu erkennen und einem Versagen der wärmedämmenden Beschichtung vorzubeugen. Außerdem kann durch das Anordnen von thermographischen Leuchtstoffen im Bodenbereich der Grabenstrukturen ein in die wärmedämmende Beschichtung integrierter Temperatur- und Wärmestromsensor realisiert werden, ohne erhebliche Zusatzkosten bei der Fertigung zu verursachen oder die strukturelle Stabilität der wärmedämmenden Beschichtung zu verändern. Die beschrieben Grabenstrukturen können mittels Laser mit hoher Präzision an verschiedenen Positionen des Bauteils, insbesondere auch in gekrümmten Bereichen, erzeugt werden.

Als thermographischer Leuchtstoff kann im erfindungsgemäßen beschichteten Bauteil wenigstens ein Metalloxid mit mindestens einem dreiwertigen Metall vorhanden sein. Beispielsweise kann das Metalloxid ein Perowskit mit der Summenformel AA'O₃ oder ein Pyrochlor mit der Summenformel A₂B₂O₇ sein, wobei A und A' für ein dreiwertiges Metall und B für ein vierwertiges Metall stehen. In einer weiteren Ausgestaltung kann A oder A' insbesondere für ein Element der seltenen Erden (auch Lanthanide genannt) oder Rhenium (Re) und das jeweils andere für wenigstens eines der folgenden Elemente stehen: Lanthan, Gadolinium, Samarium.

Im erfindungsgemäßen Bauteil kann der thermographische Leuchtstoff ein Leuchtstoff sein, dessen Leuchtfähigkeit auf einem Aktivator beruht, der wenigstens ein Element der seltenen Erden umfasst. Als Element der seltenen Erden kann er insbesondere wenigstens eines der folgenden Elemente umfassen: Cer(Ce), Europium (Eu), Dysprosium (Dy), Terbium (Tb).

Das erfindungsgemäße beschichtete Bauteil eignet sich insbesondere für den Einsatz in Gasturbinen. Entsprechend kann es als Turbinenbauteil, etwa als Lauf- oder Leitschaufel einer Gasturbinenanlage, ausgebildet sein.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Fig. 1 zeigt: beispielhaft eine Gasturbine in einem Längsteilschnitt.
- Fig. 2 zeigt: in einer perspektivischen Ansicht eine Laufschaufel oder Leitschaufel einer Gasturbine.
- Fig. 3 zeigt: die Brennkammer einer Gasturbine.
- Fig. 4 zeigt: ein erstes Ausführungsbeispiel für ein erfindungsgemäßes Bauteil in einer stark schematisierten Darstellung.
- Fig. 5 zeigt: ein zweites Ausführungsbeispiel für ein erfindungsgemäßes beschichtetes Bauteil in einer stark schematisierten Darstellung.
- Fig. 6 zeigt: ein drittes Ausführungsbeispiel für ein erfindungsgemäßes beschichtetes Bauteil in einer stark schematisierten Darstellung.
- Fig. 7 zeigt: ein viertes Ausführungsbeispiel für ein erfindungsgemäßes beschichtetes Bauteil in einer stark schematisierten Darstellung.
- Fig. 8 zeigt: ein fünftes Ausführungsbeispiel für ein erfindungsgemäßes beschichtetes Bauteil in einer stark schematisierten Darstellung.
- Fig. 9a bis 9e: zeigt ein erstes Verfahren zum Herstellen eines erfindungsgemäßen beschichteten Bauteils.
- Fig. 10a bis 10d: zeigt ein zweites Verfahren zum Herstellen eines erfindungsgemäßen beschichteten Bauteils.
- Fig. 11 zeigt: einen Schritt eines dritten Verfahrens zum Herstellen eines erfindungsgemäßen beschichtetes Bauteil.
- Fig. 12 zeigt: beispielhaft das Vorgehen beim Messen der Temperatur einer wärmedämmende Beschichtung an einer Leitschaufel einer Gasturbine.

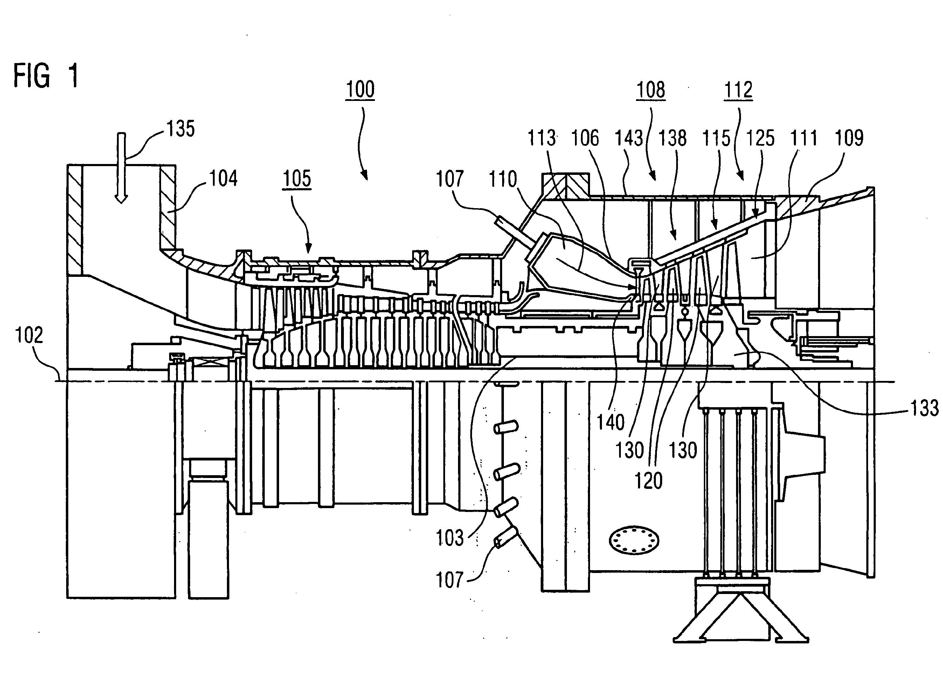

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

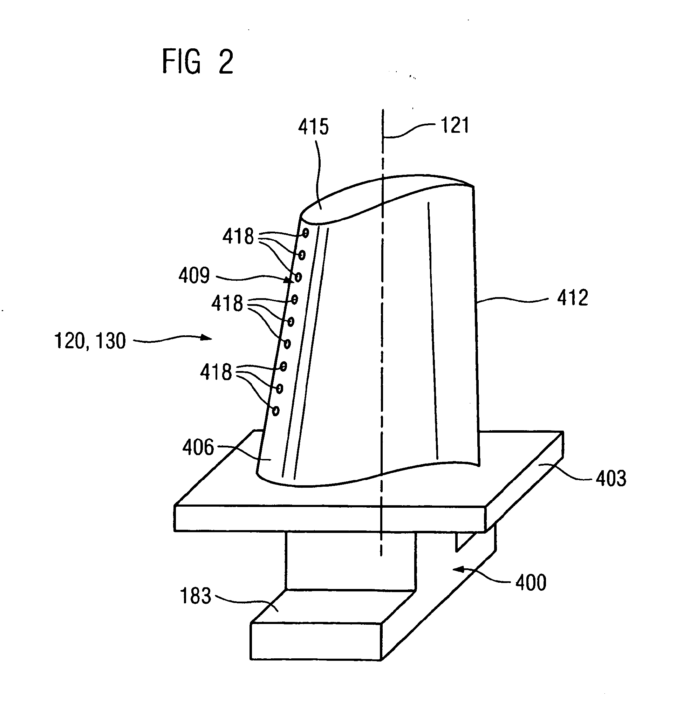

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

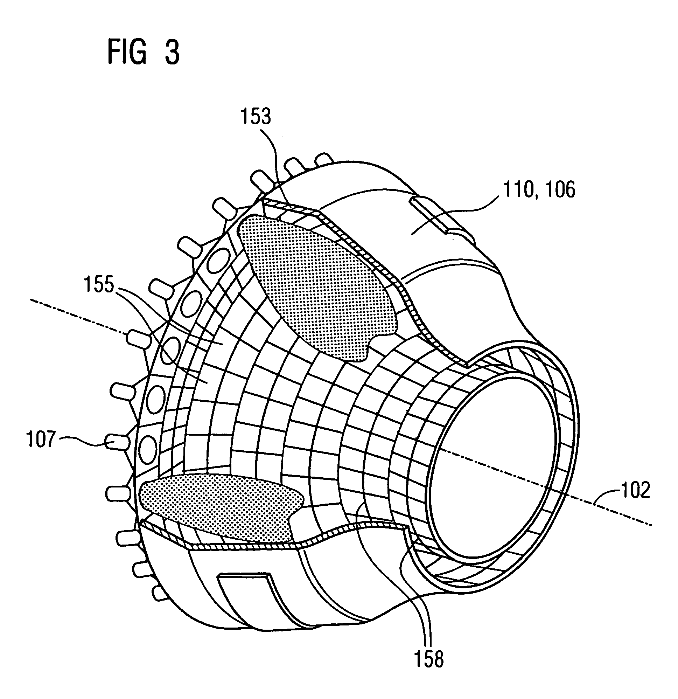

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrA1X und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

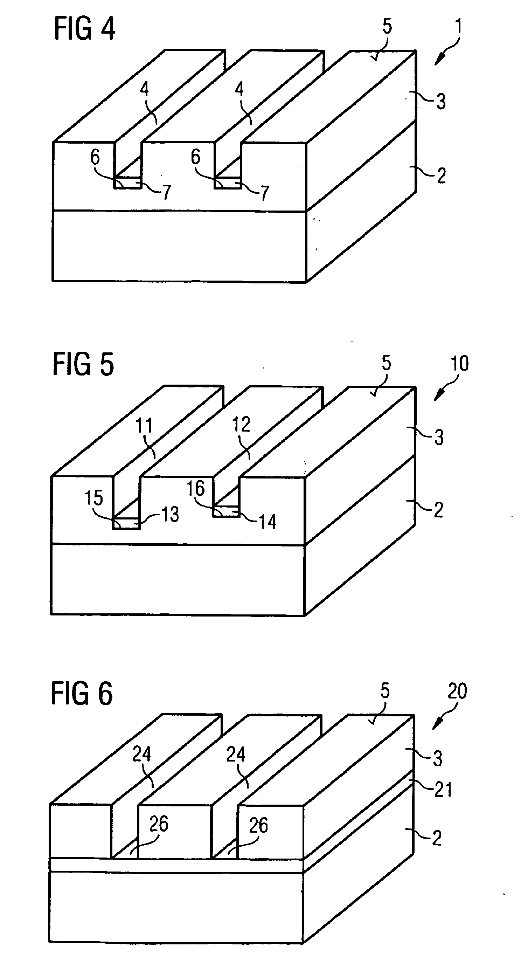

Ein erstes Ausführungsbeispiel für ein erfindungsgemäßes beschichtetes Bauteil ist in Figur 4 dargestellt.

Das stark schematisiert dargestellte Bauteil 1 soll ein Turbinenbauteil 120, 130 ,155 darstellen. Das Turbinenbauteil 1 ist aus einem Grundmaterial 2 hergestellt, auf das eine wärmedämmende Beschichtung 3 aufgebracht ist. Gegebenenfalls kann zwischen der wärmedämmenden Beschichtung 3 und dem Grundmaterial 2 noch eine Haftvermittlerschicht vorhanden sein.

Wenn das Turbinenbauteil 1, 120, 130, 155 in eine Gasturbinenanlage eingebaut ist, so ist die wärmedämmende Beschichtung 3 dem heißgasführenden Bereich der Gasturbinenanlage zugewandt. Die Beschichtung 3 sorgt dafür, dass ein verminderter Wärmeaustausch zwischen dem Heißgas und dem in der Regel metallischen Grundmaterial des Turbinenbauteils 1 erfolgt. Mit anderen Worten, die wärmedämmende Beschichtung wirkt einem Temperaturfluss in Richtung auf das Grundmaterial 2 entgegen.

Als Grundmaterial 2 für das Turbinenbauteil 1 eignen sich insbesondere auf Nickel (Ni) oder auf Kobalt (Co) basierende Superledierungen.

In der wärmedämmenden Beschichtung 3 sind Vertiefungen, beispielsweise in Form von Gräben 4 vorhanden, die sich von der Oberfläche 5 der Beschichtung 3 aus in Richtung auf das Grundmaterial 2 in die Beschichtung 3 hinein erstrecken, ohne das Grundmaterial 2 zu erreichen. Das Grundmaterial 2 ist daher auch im Bereich der Gräben 4 von der wärmedämmenden Beschichtung 3 bedeckt, jedoch ist die wärmedämmende Beschichtung 3 im Bereich der Gräben 4 weniger dick als außerhalb der Gräben 4.

Auf dem Boden 6 der Gräben 4 ist ein thermographischer Leuchtstoff 7 aufgebracht. Dieser produziert bei Bestrahlung mit einer geeigneten Wellenlänge Lumineszenzlicht, das mit einem geeigneten Detektor detektiert werden kann. Selbst wenn die wärmedämmende Beschichtung 3 für die detektierte Wellenlänge des Lumineszenzlichtes undurchlässig ist, ist dennoch eine Detektion möglich, da die Gräben 4 einen ungehinderten Austritt des Lumineszenzlichtes aus dem thermographischen Leuchtstoff 7 in einen bestimmten Raumwinkelbereich hinein ermöglichen. Der Detektor muss lediglich in diesem Raumwinkelbereich angeordnet sein, um das Lumineszenzlicht detektieren zu können.

Nachfolgend werden Beispiele für die Materialzusammensetzung der wärmedämmenden Beschichtung und des thermographischen Leuchtstoffes 7 gegeben:

### Beispiel 1

Die wärmedämmende Beschichtung 3 ist aus einem Metalloxid in Form eines Seltenerdaluminates mit der Summenformel Gd_{0,25}La_{0,75}AlO₃ hergestellt. Der thermographische Leuchtstoff ist ebenfalls aus einem Metalloxid in Form eines Seltenerdaluminates mit der Summenformel Gd_{0,25}La_{0,75}AlO₃ hergestellt. Im Unterschied zum Material der wärmedämmenden Beschichtung 3 ist das Material des thermographischen Leuchtstoffes 7 jedoch mit einem Mol-% Europiumoxid (Eu₂O₃) versetzt, wobei das Europium als ein Aktivator des Leuchtstoffes fungiert. Bei Anregung des thermographischen Leuchtstoffes 7 mit einer Wellenlänge von 254 nm emittiert dieser Lumineszenzlicht mit einem Emissionsmaximum bei etwa 610 nm. Alternativ kann als Aktivator auch ein Mol % Terbium (Tb) Verwendung finden. In diesem Fall emittiert der thermographische Leuchtstoff 7 Lumineszenzlicht mit einem Emissionsmaximum bei ca. 544 nm.
Andere Aktivatoren sind möglich.

### Beispiel 2

Die wärmedämmende Beschichtung 3 ist aus einem Pyrochlor hergestellt. Der Pyrochlor ist insbesondere ein Gadoliniumzirkonat mit der Summenformel Gd₂Zr₂O₇. Der thermographische Leuchtstoff 7 ist ebenfalls aus diesem Pyrochlor hergestellt. Im Unterschied zur wärmedämmenden Beschichtung 3 ist er jedoch mit einem Mol-% Europiumoxid versetzt, wobei das Europium als Aktivator des Leuchtstoffes dient.
Andere Aktivatoren sind möglich.

### Beispiel 3

Die wärmedämmende Beschichtung 3 ist aus einem mit Yttrium (Y)stabilisierten Zirkoniumoxid (ZrO₂) hergestellt. Der thermographische Leuchtstoff 7 ist ebenfalls aus einem mit Yttrium stabilisierten Zirkoniumoxid hergestellt, welches aber im Unterschied zur wärmedämmenden Beschichtung 3 mit einem Mol-% Eu₂O₃ versetzt ist, wobei das Europium als Aktivator des Leuchtstoffes dient.

Als ein zweites Ausführungsbeispiel für ein erfindungsgemäßes beschichtetes Bauteil ist in Figur 5 ein Turbinenbauteil 10 in einer stark schematisierten Darstellung dargestellt.

Das Turbinenbauteil 10 unterscheidet sich vom Turbinenbauteil 1 lediglich dadurch, dass Gräben 11, 12 mit unterschiedlichen Tiefen vorhanden sind. Die Tiefen der beiden Gräben sind jeweils so gewählt, dass keiner der Gräben das Grundmaterial 2 des Bauteils erreicht. Außerdem sind unterschiedliche thermographische Leuchtstoffe 13, 14 im Bereich der Grabenböden 15, 16 vorhanden. Für die Materialzusammensetzung der wärmedämmenden Beschichtung sowie der thermographischen Leuchtstoffe gilt das in den Beispielen 1 bis 3 ausgeführte analog. Es ist dabei jedoch zu berücksichtigen, dass sich der thermographische Leuchtstoff 13 vom thermographischen Leuchtstoff 14 unterscheiden soll.

Beispielsweise können die Leuchtstoffbereiche 13 und 14 jeweils aus einem Metalloxid in der Form eines Seltenerdaluminates mit der Summenformel Gd_{0,25}La_{0,75}AlO₃ hergestellt sein, wobei das Metalloxid des thermographischen Leuchtstoffes 13 mit einem Mol-% Eu₂O₃ versetzt ist, wohingegen das Metalloxid des thermographischen Leuchtstoffes 14 mit einem Mol-% Tb versetzt ist. Bei Anregung der beiden thermographischen Leuchtstoffe 13, 14 mit Laserlicht erhält man dann zwei verschiedene Emissionswellenlängen, aus welchen sich die Temperatur in jeweiliger Tiefe der wärmedämmenden Beschichtung 3 ermitteln lässt.

Als ein drittes Ausführungsbeispiel für ein erfindungsgemäßes beschichtetes Bauteil ist in Figur 6 in einer stark schematischen Darstellung ein Turbinenbauteil 20 dargestellt.

Das Turbinenbauteil 20 umfasst einen Grundwerkstoff 2 und eine wärmedämmende Beschichtung 3, für deren Eigenschaften das zum ersten Ausführungsbeispiel Ausgeführte analog gilt. Zwischen der wärmedämmenden Beschichtung 3 und dem Grundmaterial 2 des Turbinenbauteils 20 ist eine weitere Beschichtung 21 angeordnet, die ebenfalls wärmedämmende Eigenschaften aufweist. Insbesondere ist die Beschichtung 21 im dritten Ausführungsbeispiel im Wesentlichen aus demselben Material wie die wärmedämmende Beschichtung 3 hergestellt, jedoch ist das Material der Beschichtung 21 mit einem Aktivator, beispielsweise Tb versetzt.
Andere Aktivatoren sind möglich.

In die wärmedämmende Beschichtung 3 sind Vertiefungen, beispielsweise in Form von Gräben 24 eingebracht, die sich bis zur Beschichtung 21 erstrecken und diese freilegen.

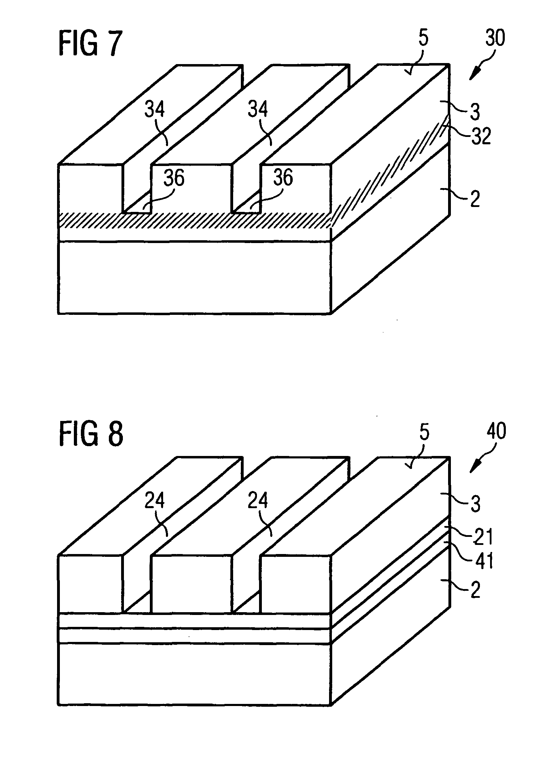

Als ein viertes Ausführungsbeispiel für ein erfindungsgemäßes beschichtetes Bauteil ist in Figur 7 ein Turbinenbauteil 30 in einer stark schematisierten Darstellung gezeigt.

Das Turbinenbauteil 30 umfasst ein Grundmaterial 2 und eine wärmedämmende Beschichtung 3, die im Wesentlichen dem Grundmaterial 2 und der wärmedämmenden Beschichtung im ersten Ausführungsbeispiel entsprechen. Anders als im ersten Ausführungsbeispiel ist die wärmedämmende Beschichtung 3 jedoch mit einem Aktivator dotiert. Als Aktivator kommt beispielsweise Terbium in Frage. Die Dotierung konzentriert sich im Wesentlichen auf eine Zone 32, die sich in einem dem Grundmaterial 2 zugewandten Bereich der wärmedämmenden Beschichtung 3 befindet. Die dotierte Zone 32 reicht insbesondere nicht bis zur Oberfläche 5 der wärmedämmenden Beschichtung 3. Die Terbium-Konzentration in der dotierten Zone umfasst wenige Mol-%, beispielsweise 1 Mol-%.

In die wärmedämmende Beschichtung 3 sind Gräben 34 eingebracht, welche bis zur dotierten Zone 32 reichen und diese im Bereich der Grabenböden 36 entblößen.

Als ein fünftes Ausführungsbeispiel für ein erfindungsgemäßes beschichtetes Bauteil ist in Figur 8 ein Turbinenbauteil 40 stark schematisiert dargestellt. Das Turbinenbauteil 40 entspricht weitgehend dem Turbinenbauteil 20 aus Figur 6 und weist als einzigen Unterschied eine Haftvermittlerschicht 41 (beispielsweise MCrAlX) auf, die zwischen der Schicht 21 und dem Grundmaterial des Turbinenbauteils 40 angeordnet ist. Die Haftvermittlerschicht 41 ist insbesondere als eine metallische Zwischenschicht, beispielsweise in Form einer Metalllegierungsschicht, ausgebildet. Sie dient dazu, das Grundmaterial 2 vor Korrosion und /oder Oxidation zu schützen und die Haftung der Schicht 21 auf dem Grundmaterial 2 des Turbinenbauteils 40 zu erhöhen. Die Materialeigenschaften der wärmedämmenden Beschichtung 3, der Schicht 21 sowie des Grundmaterials 2 entsprechen denen des dritten Ausführungsbeispiels.

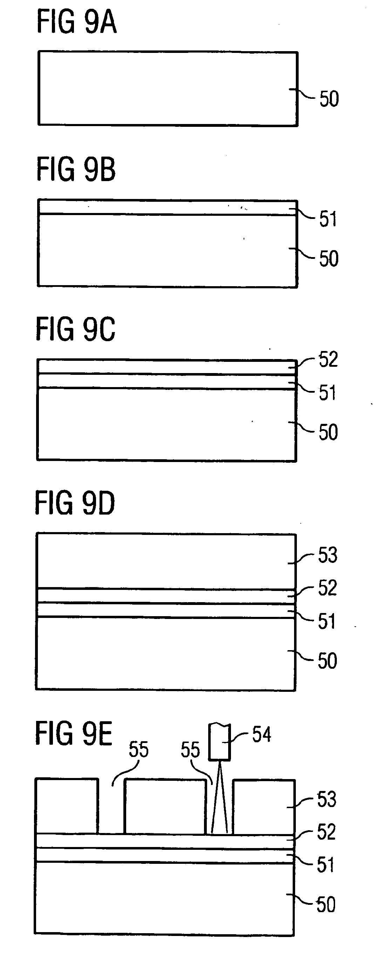

Ein Verfahren zum Herstellen eines beschichteten Bauteils ist in den Figuren 9a bis 9e beispielhaft dargestellt.

Das Ergebnis dieses Beispiels ist ein beschichtetes Bauteil, wie es im Rahmen des fünften Ausführungsbeispiels beschrieben ist.

In einem ersten Schritt wird ein unbeschichtetes Turbinenbauteil 50 zur Verfügung gestellt, welches lediglich aus dem Grundmaterial besteht (Fig. 9a). Auf das Grundmaterial des Turbinenbauteils 50 wird eine Haftvermittlerschicht 51 aufgebracht (Fig. 9b). Auf die Haftvermittlerschicht 51 wird anschließend eine Metalloxidschicht 52, welche mit einem Aktivator versetzt ist, aufgebracht. Alternativ kann statt der Metalloxidschicht 52 auch eine mit einem Aktivator versetzte Pyrochlorschicht aufgebracht werden (Fig. 9c). Das Material der Metalloxidschicht 52 bildet dabei in beiden Fällen den thermographischen Leuchtstoff. Als letzte Schicht wird schließlich eine Wärmedämmschicht 53 auf die Schicht 52 aufgebracht. Es sei an dieser Stelle erwähnt, dass auch die Schicht 52 wärmedämmende Eigenschaften aufweisen kann.

In einem letzten Arbeitsschritt werden mittels eines Lasers 54 Gräben 55 in die wärmedämmende Beschichtung 53 eingebracht. Dabei wird die Tiefe der Gräben 55 sowie die Breite der Gräben 55 mittels des Laserstrahles derart eingestellt, dass einerseits die Schicht 52 erreicht wird und andererseits die Grabengeometrie einen direkten Angriff des Heißgases auf die Schicht 52 beim Betrieb des Turbinenbauteils in einer Gasturbine verhindert.

Im erfindungsgemäßen Verfahren kann der Schritt des Aufbringens der Haftvermittlerschicht 51 auch wegfallen, sofern eine ausreichende Haftung der Schicht 52 auf dem Grundmaterial 50 des Turbinenbauteils gegeben ist. Um eine ausreichende Haftung zu gewährleisten kann beispielsweise vor dem Aufbringen der Schicht 52 ein Aufrauen der Oberfläche des Grundmaterials 50 erfolgen.

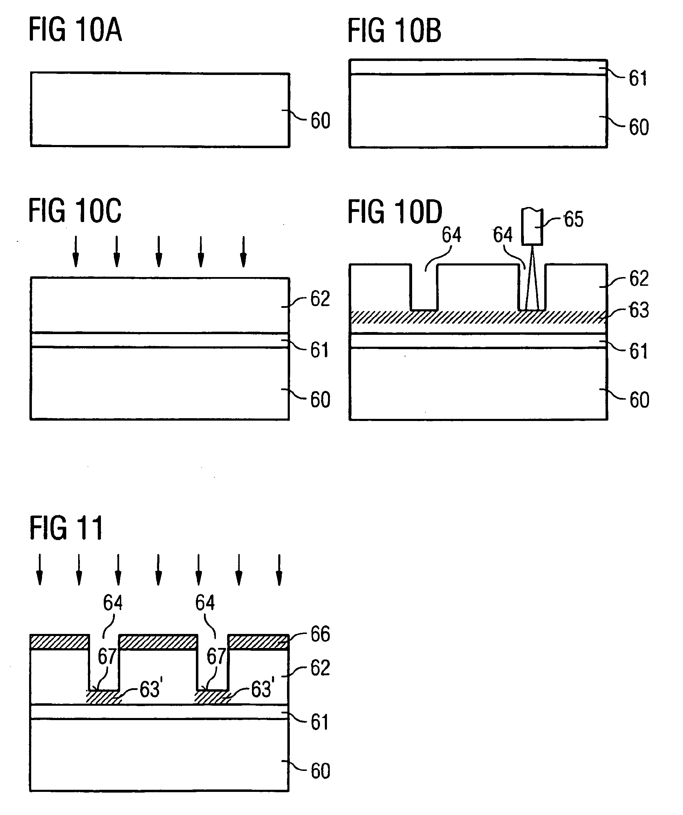

Ein zweites Ausführungsbeispiel für ein Verfahren zum Herstellen eines erfindungsgemäßen beschichteten Bauteils ist in den Figuren 10a bis 10d dargestellt.

Ausgehend von einem lediglich aus Grundmaterial 60 bestehenden Turbinenbauteil (Fig. 10a) erfolgt zuerst ein Aufbringen einer Haftvermittlerschicht 61 (Fig. 10b) sowie ein anschließendes Aufbringen einer wärmedämmenden Beschichtung 62 (Fig. 10c). Nachdem die wärmedämmende Beschichtung 62 auf die Haftvermittlerschicht 61 aufgebracht worden ist, erfolgt eine Dotierung der wärmedämmenden Beschichtung 62 mit einem geeigneten Aktivator, welcher das Material der wärmedämmenden Beschichtung 62 im dotierten Bereich in einen thermographischen Leuchtstoff verwandelt. Die Dotierung kann dabei beispielsweise durch Ionenbeschuss mit geeigneten Elementen erfolgen. Energie, Ionenfluss pro Fläche und Dauer des Dotiervorganges sind dabei so gewählt, dass sich eine dotierte Zone 63 in einer bestimmten Tiefe in der wärmedämmenden Beschichtung 62 ausbildet (Fig. 10d). In einem abschließenden Verfahrensschritt erfolgt das Einbringen von Gräben 64 unter Verwendung eines Lasers 65. Die Tiefe der Gräben wird dabei so eingestellt, dass im Bereich der Grabenböden die dotierte Zone 63 der wärmedämmenden Beschichtung 62 entblößt wird. Die Breite und Tiefe der Gräben werden außerdem derart eingestellt, dass im späteren Betrieb des Turbinenbauteils kein direkter Heißgasangriff im Bereich der Grabenböden erfolgt.

Eine Abwandlung des zweiten Ausführungsbeispiels für ein Verfahren zum Herstellen eines erfindungsgemäßen beschichteten Bauteils ist in Figur 11 dargestellt.

Im Unterscheid zum mit Bezug auf die Figuren 10a bis 10d dargestellten Herstellungsverfahren erfolgt in der Abwandlung des Verfahrens das Dotieren der wärmedämmenden Beschichtung 62 erst nach dem Einbringen der Gräben 64. Vor dem Einbringen der Gräben 64 wird zudem ein Maskenmaterial 66 auf die wärmedämmende Beschichtung 62 abgeschieden. Vor dem Dotieren erstrecken sich die Gräben 64 daher sowohl durch das Maskenmaterial 66 als auch teilweise durch die wärmedämmende Beschichtung 62.

Nach dem Herstellen der Gräben 64 erfolgt eine Dotierung, die analog zur Dotierung im zweiten Ausführungsbeispiel des Herstellungsverfahrens ausgestaltet sein kann. Das Maskenmaterial 66 verhindert dabei das Eindringen der Ionen in die vom Maskenmaterial 66 abgedeckten Bereiche der wärmedämmenden Beschichtung 62. Lediglich im Bereich der Gräben 64 können die Ionen das Material der wärmedämmenden Beschichtung 62 erreichen und in dieses Eindringen. Die dotierten Zonen 63' konzentrieren sich daher in der wärmedämmenden Beschichtung 62 auf die Bereiche unterhalb der Grabenböden 67.

Weitere Abwandlungen der beschriebenen Herstellungsverfahren sind möglich. So kann das erste Herstellungsverfahren beispielsweise dahin abgeändert werden, dass die Schicht 52 nicht hergestellt wird. Stattdessen wird nach dem Herstellen der Gräben eine Schicht aus thermographischen Leuchtstoff auf die Grabenböden abgeschieden und dort beispielsweise durch Einbrennen fixiert.

Auch brauchen die Gräben nicht alle mit derselben Tiefe hergestellt zu werden.

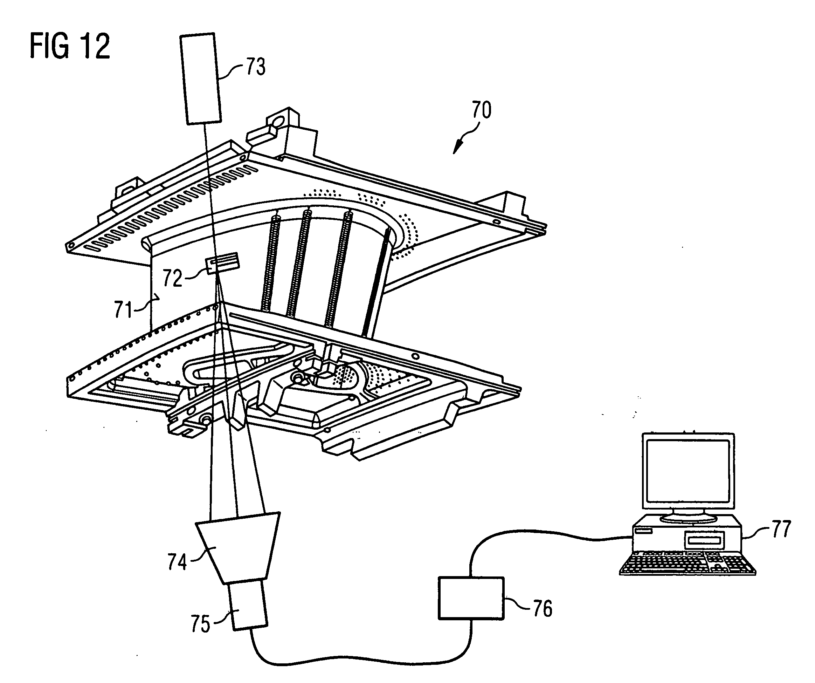

Das Vorgehen bei einer Temperaturmessung wird nun mit Bezug auf Figur 12 am Beispiel einer Leitschaufel 70 einer Gasturbine beschrieben. Die Gasturbine weist eine wärmedämmende Beschichtung 71 und einen mit Gräben versehenen Abschnitt 72 auf. Im Bereich der Grabenböden ist ein thermographischer Leuchtstoff angeordnet. Zum Messen der Temperatur erfolgt eine Anregung des thermographischen Leuchtstoffes mittels UV-Strahlung von einem UV-Laser. Auf die Anregung durch die Laserstrahlung hin erfolgt die Emission von Lumineszenzlicht durch den thermographischen Leuchtstoff, welches mittels eines Spektrometers 74 aufgenommen und mittels eines nachgeschalteten Photomultipliers 75 in elektrische Signale umgewandelt wird. Die elektrischen Signale werden vom Photomultiplier 75 an einen Analog-Digital-Wandler 76 ausgegeben, der sie in digitale Signale umwandelt und an einen PC 77 weiterleitet. Im PC 77 erfolgt schließlich die Auswertung des Spektrums des Lumineszenzlichtes.

Die Messung der Temperatur in der wärmedämmenden Beschichtung 71 erfolgt beispielsweise über das Intensitätsverhältnis zweier Wellenlängen des Emissionsspektrums. Alternativ ist es auch möglich, mit einem gepulsten Laserstrahl zu arbeiten, wobei die Temperatur in der wärmedämmenden Beschichtung aus dem Abklingverhalten der Intensität ermittelt wird. Geeignete Verfahren zum Ermitteln der Temperatur einer Wärmedämmbeschichtung aus dem Emissionsspektrum eines thermographischen Leuchtstoffes sind in EP 1 105 550 B1 beschrieben. Auf die dort beschriebenen Verfahren wird daher verwiesen.

Wenn die Wärmedämmbeschichtung 71 Gräben unterschiedlicher Tiefe aufweist und sich Emissionswellenlängen, die aus Gräben verschiedener Tiefe stammen, voneinander unterscheiden lassen, so kann mit dem Verfahren die Temperatur in Bereichen der wärmedämmenden Beschichtung 71 ermittelt werden, die unterschiedliche Abstände von der Oberfläche der Beschichtung aufweisen. Aus den Temperaturmessungen in verschiedenen Tiefen der Beschichtung lässt sich dann der durch die wärmedämmende Beschichtung 71 fließende Wärmestrom ermitteln.

Zum Ermöglichen eines Einkoppelns des Laserstrahls sowie eines Auskoppelns des Emissionsspektrums kann das Gehäuse der Gasturbine mit geeigneten Fenstern versehen sein.

Es sei darauf hingewiesen, dass eine Anordnung der Gräben an geeigneten Stellen des beschichteten Bauteils auch zu einer Erhöhung der Stabilität der wärmedämmenden Beschichtung führt.

## Patentansprüche

1. Beschichtetes Bauteil (1, 10, 20, 30, 40, 120, 130, 155), welches als Bauteil einer Heißgas führenden Struktur ausgestaltet ist und welches einen aus einem Grundmaterial (2) hergestellten Bauteilkörper und eine auf dem Grundmaterial (2) aufgebrachte wärmedämmende Beschichtung (3) umfasst, wobei ein thermographischer Leuchtstoff (7, 13, 14, 21, 32) in oder unter der wärmedämmenden Beschichtung (3) angeordnet ist,
**dadurch gekennzeichnet,**
**dass** die wärmedämmende Beschichtung (3) wenigstens eine Vertiefung (4, 11, 12, 24, 34) aufweist, wobei jede Vertiefung eine Tiefe und eine Breite besitzt, die derart gewählt ist, dass ihr Boden vor einem direkten Angriff des Heißgases geschützt ist und
**dass** der thermographische Leuchtstoff (7, 13, 14, 21, 32) im Bodenbereich (6, 15, 16, 26) der Vertiefung (4, 11, 12, 24, 34) angeordnet ist.

2. Beschichtetes Bauteil (10) nach Anspruch 1,
**dadurch gekennzeichnet, dass**
wenigstens zwei Vertiefungen (11, 12) unterschiedlicher Tiefe vorhanden sind, in deren Bodenbereichen (15, 16) thermographische Leuchtstoffe (13, 14) mit unterschiedlichen Leuchteigenschaften vorhanden sind.

3. Beschichtetes Bauteil (1, 10, 20, 30, 40, 120, 130, 155) nach Anspruch 1 oder 2,
**dadurch gekennzeichnet, dass**
der thermographische Leuchtstoff (7, 13, 14, 21, 32) selbst ebenfalls wärmedämmende Eigenschaften besitzt.

4. Beschichtetes Bauteil (1, 10, 20, 30, 40, 120, 130, 155) nach einem der Ansprüche 1 bis 3,
**dadurch gekennzeichnet, dass**
der thermographische Leuchtstoff (7, 13, 14, 21, 32) im Inneren der wärmedämmenden Beschichtung (3) angeordnet und die wenigstens eine Vertiefung (4, 11, 12, 24, 34) derart ausgebildet ist, dass der thermographische Leuchtstoff (7, 13, 14, 21, 32) im Bereich der Vertiefung freigelegt ist.

5. Beschichtetes Bauteil (20) nach Anspruch 4,
**dadurch gekennzeichnet,**
**dass** die Beschichtung wenigstens zwei übereinander aufgebrachte Schichten (3, 21) aufweist,
wobei wenigstens die äußerste Schicht (3) wärmedämmende Eigenschaften besitzt, thermographischer Leuchtstoff in einer wenigstens von der äußersten Schicht bedeckten Schicht (21) angeordnet ist und
**dass** sich die wenigstens eine Vertiefung (24) durch die über einer Leuchtstoff enthaltenden Schicht (21) angeordneten Schichten (3) erstreckt.

6. Beschichtetes Bauteil (30) nach einem der Ansprüche 1 bis 3,
**dadurch gekennzeichnet, dass**
thermographischer Leuchtstoff in Form mindestens einer wenigstens im Bereich einer Vertiefung (24) in die wärmedämmende Beschichtung (3) eingebrachten Dotierung (32) vorliegt.

7. Beschichtetes Bauteil (30) nach Anspruch 6,
**dadurch gekennzeichnet,**
**dass** jede Dotierung eine sich in einem bestimmten Abstand von der Beschichtungsoberfläche (5) durch die gesamte wärmedämmende Beschichtung (3) erstreckende dotierte Zone (32) bildet und
**dass** die Tiefe der wenigstens einen Vertiefung (34) derart gewählt ist, dass eine dotierte Zone (32) im Bereich der Vertiefung (34) freigelegt ist.

8. Beschichtetes Bauteil nach Anspruch 6,
**dadurch gekennzeichnet, dass**
eine Dotierung lediglich im Bodenbereich der wenigstens einen Vertiefung vorliegt.

9. Beschichtetes Bauteil (1, 10) nach einem der Ansprüche 1 bis 3,
**dadurch gekennzeichnet, dass**
der thermographische Leuchtstoff als auf den Boden (6, 15, 16) der Vertiefung (4, 11, 12) aufgebrachte Leuchtstoffbeschichtung (7, 13, 14) vorliegt.

10. Beschichtetes Bauteil (1, 10, 20, 30, 40, 120, 130, 155) nach einem der vorangehenden Ansprüche,
**dadurch gekennzeichnet, dass**
die wenigstens eine Vertiefung (4, 11, 12, 24, 34) grabenförmig ausgestaltet ist.

11. Beschichtetes Bauteil (1, 10, 20, 30, 40, 120, 130, 155) nach einem der vorangehenden Ansprüche,
**dadurch gekennzeichnet, dass**
wenigstens eine Vertiefung (4, 11, 12, 24, 34) in einem beim Betrieb des Bauteils thermisch hochbelasteten Bauteilbereich angeordnet ist.

12. Beschichtetes Bauteil (1, 10, 20, 30, 40, 120, 130, 155) nach einem der vorangehenden Ansprüche,
**dadurch gekennzeichnet, dass**
der thermographische Leuchtstoff (7, 13, 14, 21, 32) wenigstens ein Metalloxid mit mindestens einem dreiwertigen Metall aufweist.

13. Beschichtetes Bauteil (1, 10, 20, 30, 40, 120, 130, 155) nach Anspruch 12,
**dadurch gekennzeichnet, dass**
das Metalloxid ein Perowskit mit der Summenformel AA'O₃ oder ein Pyrochlor mit der Summenformel A₂B₂O₇ ist, wobei A und A' für ein dreiwertiges Metall und B für ein vierwertiges Metall stehen.

14. Beschichtetes Bauteil (1, 10, 20, 30, 40, 120, 130, 155) nach Anspruch 13,
**dadurch gekennzeichnet, dass**
A oder A' für eine Element der seltenen Erden oder Rhenium und das jeweils andere für wenigstens eines der folgenden Element steht: Lanthan, Gadolinium, Samarium.

15. Beschichtetes Bauteil (1, 10, 20, 30, 40, 120, 130, 155) nach einem der vorangehenden Ansprüche,
**dadurch gekennzeichnet, dass**
der thermographische Leuchtstoff (7, 13, 14, 21, 32) ein Leuchtstoff ist,
dessen Leuchtfähigkeit auf einem Aktivator beruht und der Aktivator wenigstens eine Element der seltenen Erden umfasst.

16. Beschichtetes Bauteil (1, 10, 20, 30, 40, 120, 130, 155) nach Anspruch 16,
**dadurch gekennzeichnet, dass**
der Aktivator als Element der seltenen Erden wenigstens eines der folgenden Element umfasst: Cer, Europium, Dysprosium, Terbium.

17. Beschichtetes Bauteil (1, 10, 20, 30, 40, 120, 130, 155) nach einem der vorangehenden Ansprüche,
**gekennzeichnet durch** seine Ausgestaltung als Turbinenbauteil.

18. Verfahren zur Herstellung eines Bauteils (1, 10, 20, 30, 40, 120, 130, 155) nach Anspruch 1,
in dem auf einen aus einem Grundmaterial (2) hergestellten Bauteilkörper eine wärmedämmende Beschichtung (3) aufgebracht wird,
**dadurch gekennzeichnet,**
**dass** in einem Zwischenschritt vor dem Aufbringen der wärmedämmenden Beschichtung eine Metalloxidschicht, eine Pyrochlorschicht oder eine mit Yttrium stabilisierte Zirkonoxidschicht erzeugt wird, wobei die Schicht einen Aktivator enthält, der sie zu einer themrographischen Leuchtstoffschicht macht, und
**dass** in einem der letzten Verfahrensschritte eine Vertiefung (55) oder ein Graben (55) in die wärmedämmende Beschichtung (53) eingebracht wird, der den thermographischen Leichtstoff frei legt.

19. Verfahren nach Anspruch 18,
**dadurch gekennzeichnet,**
**dass** in dem Zwischenschritt die den Aktivator enthaltende Schicht in einem Beschichtungsverfahren auf das Grundmaterial (2, 50) aufgebracht wird.

20. Verfahren zur Herstellung eines Bauteils (1, 10, 20, 30, 40, 120, 130, 155) nach Anspruch 1,
in dem auf einen aus einem Grundmaterial (2) hergestellten Bauteilkörper eine wärmedämmende Beschichtung (3) aufgebracht wird,
**dadurch gekennzeichnet,**
**dass** ein Aktivator mittels Dotierung in eine bestimmte Tiefe der wärmedämmenden Beschichtung eingebracht wird,
**dass** der Aktivator so gewählt ist, dass er die wärmedämmende Beschichtung im dotierten Bereich in einen thermographischen Leuchtstoff verwandelt, und
**dass** in einem der letzten Verfahrensschritte eine Vertiefung (55) oder ein Graben (55) in die wärmedämmende Beschichtung (53) eingebracht wird, der den thermographischen Leichtstoff frei legt.

21. Verfahren nach Anspruch 20,
**dadurch gekennzeichnet,**
**dass** die Dotierung durch Ionenimplantation erfolgt.

22. Verfahren zur Herstellung eines Bauteils (1, 10, 20, 30, 40, 120, 130, 155) nach Anspruch 1,
in dem auf einen aus einem Grundmaterial (2) hergestellten Bauteilkörper eine wärmedämmende Beschichtung (3) aufgebracht wird,
**dadurch gekennzeichnet, dass**
zuerst ein Graben (64) in der wärmedämmenden Beschichtung erzeugt wird und
dann ein thermographischer Leuchtstoff in den oder auf den Boden des Grabens ein- bzw. aufgebracht wird.

23. Verfahren nach Anspruch 22,
**dadurch gekennzeichnet, dass**
der thermographische Leuchtstoff mittels Dotierung in den Boden des Grabens eingebracht wird.

24. Verfahren nach Anspruch 22,
**dadurch gekennzeichnet, dass**
der thermographische Leuchtstoff auf den Boden des Grabens abgeschieden wird.

## Claims

1. Coated component (1, 10, 20, 30, 40, 120, 130, 155), which is configured as a component of a structure which routes hot gas and which comprises a component body made from a base material (2) and a thermal barrier coating (3) applied to the base material (2), a thermographic phosphor (7, 13, 14, 21, 32) being arranged in or beneath the thermal barrier coating (3),
**characterized**
**in that** the thermal barrier coating (3) has at least one recess (4, 11, 12, 24, 34), each recess having a depth and a width which are selected in such a manner that its base is protected from being directly attacked by the hot gas, and
**in that** the thermographic phosphor (7, 13, 14, 21, 32) is arranged in the base region (6, 15, 16, 26) of the recess (4, 11, 12, 24, 34).

2. Coated component (10) according to claim 1, **characterized in that**
there are at least two recesses (11, 12) of different depths, in the base regions (15, 16) of which thermographic phosphors (13, 14) with different illumination properties are present.

3. Coated component (1, 10, 20, 30, 40, 120, 130, 155) according to claim 1 or 2,
**characterized in that**
the thermographic phosphor (7, 13, 14, 21, 32) itself likewise has thermal barrier properties.

4. Coated component (1, 10, 20, 30, 40, 120, 130, 155) according to claim 1 to 3,
**characterized in that**
the thermographic phosphor (7, 13, 14, 21, 32) is arranged in the interior of the thermal barrier coating (3), and the at least one recess (4, 11, 12, 24, 34) is formed in such a manner that the thermographic phosphor (7, 13, 14, 21, 32) is uncovered in the region of the recess.

5. Coated component (20) according to claim 4,
**characterized**
**in that** the coating has at least two layers (3, 21) applied on top of one another, at least the outermost layer (3) having thermal barrier properties, with thermographic phosphor being arranged in a layer (21) that is covered at least by the outermost layer, and
**in that** the at least one recess (24) extends through the layers (3) arranged above a layer (21) containing phosphor.

6. Coated component (30) according to one of claims 1 to 3,
**characterized in that**
thermographic phosphor is present in the form of at least one doping (32) which has been introduced into the thermal barrier coating (3) at least in the region of a recess (24).

7. Coated component (30) according to claim 6,
**characterized**
**in that** each doping forms a doped zone (32) which, at a certain distance from the coating surface (5), extends through the entire thermal barrier coating (3), and
**in that** the depth of the at least one recess (34) is selected in such a manner that a doped zone (32) is uncovered in the region of the recess (34).

8. Coated component according to claim 6,
**characterized in that**
a doping is present only in the base region of the at least one recess.

9. Coated component (1, 10) according to one of claims 1 to 3,
**characterized in that**
the thermographic phosphor is present as a phosphor coating (7, 13, 14) which has been applied to the base (6, 15, 16) of the recess (4, 11, 12).

10. Coated component (1, 10, 20, 30, 40, 120, 130, 155) according to one of the preceding claims,
**characterized in that**
the at least one recess (4, 11, 12, 24, 34) is of trench-like configuration.

11. Coated component (1, 10, 20, 30, 40, 120, 130, 155) according to one of the preceding claims,
**characterized in that**
at least one recess (4, 11, 12, 24, 34) is arranged in a component region which is highly thermally stressed when the component is operating.

12. Coated component (1, 10, 20, 30, 40, 120, 130, 155) according to one of the preceding claims,
**characterized in that**
the thermographic phosphor (7, 13, 14, 21, 32) includes at least one metal oxide comprising at least one trivalent metal.

13. Coated component (1, 10, 20, 30, 40, 120, 130, 155) according to claim 12,
**characterized in that**
the metal oxide is a perovskite with the empirical formula AA'O₃ or a pyrochlore with the empirical formula A₂B₂O₇, where A and A' represent a trivalent metal and B represents a tetravalent metal.

14. Coated component (1, 10, 20, 30, 40, 120, 130, 155) according to claim 13
**characterized in that**
A or A' stands for a rare earth element or rhenium, and the other in each case stands for at least one of the following elements: lanthanum, gadolinium, samarium.

15. Coated component (1, 10, 20, 30, 40, 120, 130, 155) according to one of the preceding claims,
**characterized in that**
the thermographic phosphor (7, 13, 14, 21, 32) is a phosphor whose ability to light up is based on an activator, and the activator comprises at least one rare earth element.

16. Coated component (1, 10, 20, 30, 40, 120, 130, 155) according to claim 16,
**characterized in that**
the activator, as rare earth element, comprises at least one of the following elements: cerium, europium, dysprosium, terbium.

17. Coated component (1, 10, 20, 30, 40, 120, 130, 155) according to one of the preceding claims,
**characterized by** being configured as a turbine component.

18. Process for producing the component (1, 10, 20, 30, 40, 120, 130, 155) according to claim 1,
in which a thermal barrier coating (3) is applied to a component body made from a base material (2),
**characterized**
**in that** in an intermediate step which precedes the application of the thermal barrier coating, a metal oxide layer, a pyrochlore layer or an yttrium-stabilized zirconium oxide layer is produced, the layer containing an activator which makes it into a thermographic phosphor layer, and
**in that** in one of the last process steps a recess (55) or a trench (55) which uncovers the thermographic phosphor is introduced into the thermal barrier coating (53).

19. Process according to claim 18,
**characterized**
**in that** in the intermediate step the layer containing the activator is applied to the base material (2, 50) in a coating process.

20. Process for producing the component (1, 10, 20, 30, 40, 120, 130, 155) according to claim 1,
in which a thermal barrier coating (3) is applied to a component body made from a base material (2),
**characterized**
**in that** an activator is introduced to a defined depth into the thermal barrier coating by means of doping,
**in that** the activator is selected in such a way that it converts the thermal barrier coating into a thermographic phosphor in the doped region, and
**in that** in one of the last process steps a recess (55) or a trench (55), which uncovers the thermographic phosphor, is introduced into the thermal barrier coating (53).

21. Process according to claim 20,
**characterized**
**in that** the doping is effected by ion implantation.

22. Process for producing the component (1, 10, 20, 30, 40, 120, 130, 155) according to claim 1,
in which a thermal barrier coating (3) is applied to a component body made from a base material (2),
**characterized**
**in that**
first of all a trench (64) is produced in the thermal barrier coating, and
then a thermographic phosphor is introduced into or applied to the base of the trench.

23. Process according to claim 22,
**characterized in that**
the thermographic phosphor is introduced into the base of the trench by means of doping.

24. Process according to claim 22,
**characterized in that**
the thermographic phosphor is deposited on the base of the trench.

## Revendications

1. Elément(1, 10, 20, 30, 40, 120, 130, 155) revêtu, qui est conformé en élément d'une structure dans laquelle passe du gaz chaud et qui comprend une pièce d'élément fabriqué en un matériau (2) de base et un revêtement (3)calorifuge déposé sur le matériau (2) de base, une substance (7, 13, 14, 21, 32) luminescente thermographique étant disposée dans ou sous le revêtement (3) calorifuge
**caractérisé**
**en ce que** le revêtement (3) calorifuge a au moins une cavité (4, 11, 12, 24, 34), chaque cavité ayant une profondeur et une largeur qui sont choisies de manière à ce que son fond soit protégé d'une attaque directe du gaz chaud et
**en ce que** la substance (7, 13, 14, 21, 32) luminescente thermographique est disposée dans la partie (6, 15, 16, 26) de fond de la cavité (4, 11, 12, 24, 34).

2. Elément (10) revêtu suivant la revendication 1,
**caractérisé en ce que**
il y a au moins deux cavités (11, 12) de profondeur différente dans les parties (15, 16) de fond desquelles il y a des substances (13, 14) luminescentes thermographiques ayant des propriété de luminescence différente.

3. Elément(1, 10, 20, 30, 40, 120, 130, 155) revêtu suivant la revendication 1 ou 2,**caractérisé en ce que**
la substance (7,13,14,21,32) luminescente thermographique a elle même également des propriétés calorifuges.

4. Elément(1, 10, 20, 30, 40, 120, 130, 155) suivant l'une des revendications 1 à 3,
**caractérisé en ce que**
la substance (7,13,14,21,32) thermographique est disposée au sein du revêtement (3) calorifuge et la au moins une cavité (4,11,12,24,34) est constituée d'une façon à ce que la substance (7,13,14,21,32) luminescente thermographique soit à découvert dans la partie de la cavité.

5. Elément (20) revêtu suivant la revendication 4,
**caractérisé**
**en ce que** le revêtement a au moins deux couches (3, 21) déposées l'une sur l'autre,
au moins la couche (3) extérieure ayant des propriétés calorifuges,de la substance luminescente thermographique étant disposée dans une couche (21) revêtue d'au moins la couche la plus extérieure et
**en ce que** la au moins une cavité (24) s'étend à travers les couches (3) disposées sur la couche (21) contenant une substance luminescence.

6. Elément (30) revêtu suivant l'une des revendications 1 à 3,
**caractérisé**
**en ce que** de la substance luminescente thermographique se trouve sous la forme d'au moins un dopage (32) introduit au moins dans la partie d'une cavité (34) dans le revêtement (3) calorifuge.

7. Elément (30) revêtu suivant la revendication 6,
**caractérisé**
**en ce que** chaque dopage forme une zone (32) dopée s'étendant à une certaine distance de la surface (5) de revêtement à travers tout le revêtement (3) calorifuge et
**en ce que** la profondeur de la au moins une cavité (34) est choisie de façon à ce qu'une zone (32) dopée soit à découvert dans la partie de la cavité (34).

8. Elément revêtu suivant la revendication 6,
**caractérisé en ce que** il y a un dopage seulement dans la partie de fond de la au moins une cavité.

9. Elément (1, 10) revêtu suivant l'une des revendications 1 à 6,
**caractérisé en ce que** la substance luminescente thermographique se présente sous la forme d'un revêtement (7, 13, 14) de substance luminescente thermographique déposé sur le fond (6, 15, 16) de la cavité (4, 11, 12).

10. Elément(1, 10, 20, 30, 40, 120, 130, 155) suivant l'une des revendications précédentes,
**caractérisé en ce que** au moins une cavité (4,11,12,24,34) est constitué sous la forme d'un sillon.

11. Elément(1, 10, 20, 30, 40, 120, 130, 155) suivant l'une des revendications précédentes,
**caractérisé en ce que** au moins une cavité (4,11,12,24,34) est disposée dans une partie de l'élément très sollicitée thermiquement lors du fonctionnement de l'élément.

12. Elément(1, 10, 20, 30, 40, 120, 130, 155) suivant l'une des revendications précédentes,
**caractérisé en ce que** la substance (7,13,14,21,32) luminescente thermographique a au moins un oxyde métallique ayant au moins un métal trivalent.

13. Elément(1, 10, 20, 30, 4 0, 120, 130, 155) suivant la revendication 12,
**caractérisé en ce que**
un oxyde métallique est un perowskite ayant la formule générale AA'O₃ ou un pyrochlore ayant la formule générale A₂B₂O₇, A et A' étant un métal trivalent et B un métal tétravalent.

14. Elément (1, 10, 20, 30, 40, 120, 130, 155) suivant la revendication 13,
**caractérisé en ce que** A ou A' est un métal rare ou le rhénium et l'autre respectivement est au moins l'un des éléments suivants : lanthane, gadolinium, samarium.

15. Elément (1, 10, 20, 30, 40, 120, 130, 155) suivant l'une des revendications précédentes,
**caractérisé en ce que**
la substance (7, 13 , 14, 21, 32) luminescente thermographique est une substance luminescente,
dont la capacité de luminescence repose sur un activateur et l'activateur comprend au moins un élément des terres rares.

16. Elément(1, 10, 20, 30, 40, 120, 130, 155) suivant la revendication 15,
**caractérisé en ce que** l'activateur comprend comme élément des terres rares au moins l'un des éléments suivant : cérium, europium, dysprosium, terbium.

17. Elément (1, 10, 20, 30, 40, 120, 130, 155) suivant l'une des revendications précédentes,
**caractérisé par** sa conformation en élément de turbine.

18. Procédé de fabrication d'un élément (1, 10, 20, 30, 40, 120, 130, 155) suivant la revendication 1,
dans lequel on dépose un revêtement (3) réfractaire sur une pièce d'élément fabriquée en un matériau (2) de base,
**caractérisé**
**en ce que** l'on produit dans un stade intermédiaire, avant le dépôt du revêtement réfractaire, une couche d'oxyde métallique, une couche de pyrochlore ou une couche d'oxyde d' yttrium stabilisée par d'yttrium couche la couche contenant un activateur qui se transforme en une luminescente thermographique, et
**en ce que** dans l'un des derniers stades du procédé, on ménage une cavité (55) ou un sillon (55) dans le revêtement (53) calorifuge, qui met à nu la substance luminescente thermographique.

19. Procédé suivant la revendication 18,
**caractérisé**
**en ce que** l'on dépose dans le stade intermédiaire la couche contenant l'activateur sur le matériau (2, 50) de base par un procédé d'application d'un revêtement.

20. Procédé de fabrication d'un élément (1, 10, 20, 30, 40, 120, 130, 155) suivant la revendication 1,
dans lequel on dépose un revêtement (3) réfractaire sur une pièce d'élément fabriquée en un matériau (2) de base,
**caractérisé**
**en que** l'on introduit un activateur au moyen d'un dopage à une profondeur déterminée du revêtement réfractaire,
en ce que l'on choisit l'activateur de manière à ce qu'il transforme le revêtement réfractaire dans la partie dopée en une substance luminescente thermographique, et
en ce que, dans l'un des derniers stades du procédé, on ménage une cavité (55) ou un sillon (55) dans le revêtement (53) calorifuge, qui met à nu la substance luminescente thermographique.

21. Procédé suivant la revendication 20,
**caractérisé en ce que** l'on effectue le dopage par implantation d'ions.

22. Procédé de fabrication d'un élément (1, 10, 20, 30, 40, 120, 130, 155) suivant la revendication 1,
dans lequel on dépose un revêtement (3) réfractaire sur une pièce d'élément fabriquée en un matériau (2) de base,
**caractérisé**
on produit d'abord un sillon (64) dans le revêtement calorifuge et
on dépose ensuite une substance luminescente thermographique dans le fond ou sur le fond du sillon ou on y introduit.

23. Procédé suivant la revendication 22,
**caractérisé en ce que** l'on introduit la substance luminescente thermographique au moyen d'un dopage dans le fond du sillon .

24. Procédé suivant la revendication 22,
**caractérisé en ce que** l'on dépose la substance luminescente thermographique sur le fond du sillon.
